# EUROPEAN PATENT APPLICATION

(11) **EP 4 837 801 A1**
(43) Date of publication of application: **11.11.2026**
(21) Application number: 26176306.4
(22) Date of filing: 04.05.2026
(51) Int. Cl.: B60W 10/06, B60W 10/30, B60W 30/18, B60W 30/182, B60W 50/00, F01N 9/00

(54) **A COMPUTER SYSTEM COMPRISING PROCESSING CIRCUITRY CONFIGURED TO DETERMINE A TRAVEL PLAN FOR A VEHICLE TO TRAVEL FROM A FIRST LOCATION TO A SECOND LOCATION**

(30) Priority: 06.05.2025 EP 25174354
(71) Applicant: Volvo Truck Corporation, 405 08 Göteborg (SE)
(72) Inventor: Wilhelmsson, Martin, 423 39 Torslanda (SE); Stjernberg, Oscar, 411 35 Göteborg (SE); Gertzell, Alexander, 413 06 Göteborg (SE)
(74) Representative: Valea AB

(57) **Abstract**

A computer system and method are disclosed for generating a travel plan for a vehicle comprising an internal combustion engine and a particulate filter. The computer system obtains route preview data for an upcoming driving event, the route preview data comprising road gradient and at least one of speed limit data, traffic-dependent speed prediction data, or historical speed data. The computer system uses the obtained route preview data to determine, for each of a plurality of candidate regeneration initiation portions along the route, a respective predicted fuel balance associated with initiating particulate filter regeneration at the candidate regeneration initiation portions. On the basis of the determined predicted fuel balance, the computer system selects a regeneration initiation portion among the plurality of candidate regeneration initiation portions for inclusion in the travel plan.

## Description

### TECHNICAL FIELD

The disclosure relates generally to determining a travel plan. In particular aspects, the disclosure relates to a computer system comprising processing circuitry configured to determine a travel plan for a vehicle to travel from a first location to a second location. The disclosure also relates to a method for determining a travel plan for a vehicle to travel from a first location to a second location. Moreover, the disclosure relates to a vehicle, a computer program product and a non-transitory computer-readable storage medium. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

An engine system may comprise an engine and an exhaust gas aftertreatment system. The exhaust gas aftertreatment system may in turn comprise a particulate filter, such as a Diesel Particulate Filter (DPF), for capturing and reducing soot particles emitted in the exhaust gas. Over time, the filter may become saturated and require a regeneration process to burn off the accumulated soot. This regeneration may require the engine to stay running in order to maintain the high exhaust temperatures and flow necessary for effective cleaning. Moreover, vehicles are usually equipped with an engine start/stop function, which may help to save fuel and reduce emissions by automatically turning off the engine when it is necessary and restarting it when needed.

### SUMMARY

According to the invention, also referred to as a first aspect of the disclosure, a computer system is provided. The computer system comprises processing circuitry configured to generate a travel plan for a vehicle to travel from a first location to a second location. The vehicle comprises an engine system comprising an internal combustion engine, and a particulate filter adapted to receive exhaust gas from the internal combustion engine. The processing circuitry is further configured to:
- obtain route preview data for an upcoming driving event, the route preview data comprising at least road gradient and at least one of speed limit data, traffic-dependent speed prediction data, or historical speed data for the route;
- use the obtained route preview data to determine, for each of a plurality of candidate regeneration initiation portions along the route, a respective predicted fuel balance associated with initiating particulate filter regeneration at the candidate regeneration initiation portion, wherein the predicted fuel balance is determined based on:
   ∘ a predicted fuel consumption attributable to carrying out the particulate filter regeneration when initiated at the candidate regeneration initiation portion; and
   ∘ a predicted fuel-saving loss attributable to inhibiting an engine start/stop function during at least part of a regeneration interval resulting from initiating the particulate filter regeneration at the candidate regeneration initiation portion;
- on the basis of the determined predicted fuel balance, select a regeneration initiation portion among the plurality of candidate regeneration initiation portions for inclusion in the travel plan.

The at least one of speed limit data, traffic-dependent speed prediction data, or historical speed data may indicate an expected vehicle speed profile along the route. By combining the expected speed profile with the road gradient information, the computer system may predict a vehicle load, expected exhaust temperature conditions, and the possibility of enabling stop-start events along the route. Based on these predictions, the computer system may estimate both the additional fuel consumption attributable to performing particulate filter regeneration and the fuel-saving loss attributable to inhibiting the engine start/stop function during at least part of the regeneration interval, thereby determining a predicted fuel impact for each candidate regeneration initiation portion. Accordingly, the computer system may select an appropriate regeneration initiation portion. A technical benefit may include that overall efficiency may be improved.

Optionally, the route preview data further comprises driving event information from at least one previous driving event following the same route, the driving event information comprising at least one of a recorded engine power, a recorded vehicle speed, a recorded particulate filter temperature, a recorded road gradient, or a recorded consecutive driving time at a vehicle speed higher than a predetermined value. The driving event information may be understood as historical data that has been recorded when performing the same driving event following the same route. By including these historical data, a technical benefit may include an improved prediction accuracy for parameters like vehicle speeds, engine loads or temperatures on that specific route.

Optionally, determining the predicted fuel-saving loss comprises, for each candidate regeneration initiation portion, predicting an engine-off opportunity measure for a future interval following initiation within the candidate regeneration initiation portion, using the route preview data. In this way, it may quantify where start/stop would likely be used after initiation, so regeneration may be scheduled to avoid high start/stop benefit segments. A technical benefit may include improved fuel efficiency.

Optionally, the engine-off opportunity measure comprises a predicted total eco-roll time within a pre-specified time window following initiation within the candidate regeneration initiation portion. Herein, the eco-roll time may be understood as the time the vehicle spends coasting with little or no drive torque, often with the engine decoupled or switched off to save fuel. By predicting a total eco-roll time, it may provide a direct evaluation for start/stop opportunities. A technical benefit may include an improved robustness of the fuel-saving loss estimate.

Optionally, the predicted fuel-saving loss is determined by estimating a fuel quantity that would be saved by enabling an engine start/stop function during predicted eco-roll segments within the future interval, and setting the predicted fuel-saving loss equal to the estimated fuel quantity. The computer system may convert start/stop inhibition into a concrete fuel quantity. A technical benefit may include a more accurate estimation of the fuel-saving loss.

Optionally, determining the predicted fuel consumption attributable to carrying out the particulate filter regeneration comprises predicting a regeneration fuel quantity as a function of a particulate filter loading metric.

Optionally, the particulate filter loading metric comprises at least one of: a soot load estimate, a pressure drop across the particulate filter, or a distance or a time window since a previous regeneration. In this way, it may estimate the regeneration fuel cost based on the actual filter state. A technical benefit may include an improved accuracy of the regeneration fuel cost estimation.

Optionally, the processing circuitry is further configured to: for each candidate regeneration initiation portion, evaluate a regeneration feasibility constraint for a regeneration interval resulting from initiating regeneration at the candidate regeneration initiation portion. The regeneration feasibility constraint comprises at least one of:
o a constraint that an average engine power over a predetermined sub-period within the regeneration interval exceeds an engine power threshold;
o a constraint that a consecutive driving time above a vehicle speed threshold within the regeneration interval exceeds a time threshold; or
o a constraint that a particulate filter temperature within the regeneration interval exceeds a particulate filter temperature threshold.
Moreover, the at least one of the average engine power, the consecutive driving time, or the particulate filter temperature is determined using the driving event information.

By evaluating the regeneration feasibility, the system may reduce the risk of initiating regeneration when conditions are unsuitable. A technical benefit may include an improved completion success of regeneration.

Optionally, selecting the regeneration initiation portion comprises selecting a candidate regeneration initiation portion such that the predicted fuel balance is below a below a threshold value while the regeneration feasibility constraint is satisfied. The system may ensure the selected plan is both fuel-economy and practically achievable.

Optionally, the processing circuitry is further configured to: identify a current vehicle operating condition, and adjusting at least one of the parameters: an average engine power, a consecutive driving time, or a particulate filter temperature determined from the driving event information based on the current vehicle operating condition. This may ensure that prediction of the parameters is based on the current vehicle operating condition. A technical benefit may include that overall prediction accuracy and decision quality may be improved.

Optionally, the current vehicle operating condition comprises at least one of: vehicle mass, ambient temperature, time of day, or weather condition.

Optionally, the predicted fuel-saving loss is determined as a function of predicted durations or distances for which the engine start/stop function would stop the engine absent the particulate filter regeneration.

According to a second aspect of the disclosure, a vehicle is provided. The vehicle comprises the computer system according to the first aspect of the disclosure. Accordingly, technical benefits of the third aspect of the disclosure are largely analogous to the technical benefit of the first aspect of the disclosure.

According to a third aspect of the disclosure, a computer-implemented method for generating a travel plan for a vehicle to travel from a first location to a second location is provided. The vehicle comprises an engine system comprising an internal combustion engine, and a particulate filter adapted to receive exhaust gas from the internal combustion engine. The method comprises:
- obtaining, by processing circuitry, route preview data for an upcoming driving event, the route preview data comprising at least road gradient and at least one of speed limit data, traffic-dependent speed prediction data, or historical speed data for the route;
- using, by the processing circuitry, the obtained route preview data to determine, for each of a plurality of candidate regeneration initiation portions along the route, a respective predicted fuel balance associated with initiating particulate filter regeneration at the candidate regeneration initiation portions, wherein the predicted fuel balance is determined based on:
   ∘ a predicted fuel consumption attributable to carrying out the particulate filter regeneration when initiated at the candidate regeneration initiation portion; and
   ∘ a predicted fuel-saving loss attributable to inhibiting an engine start/stop function during at least part of a regeneration interval resulting from initiating the particulate filter regeneration at the candidate regeneration portion;
- on the basis of the determined predicted fuel balance, selecting, by the processing circuitry, a regeneration initiation portion among the plurality of candidate regeneration initiation portions for inclusion in the travel plan.

Technical benefits of the third aspect of the disclosure are largely analogous to the technical benefit of the first aspect of the disclosure. It shall also be noted that all examples of the third aspect of the disclosure are applicable to and/or combinable with all examples of the first aspect of the disclosure, and vice versa.

Optionally, the route preview data further comprises driving event information from at least one previous driving event following the same route, the driving event information comprising at least one of a recorded engine power, a recorded vehicle speed, a recorded particulate filter temperature, a recorded road gradient, or a recorded consecutive driving time at a vehicle speed higher than a predetermined value.

Optionally, determining the predicted fuel-saving loss comprises, for each candidate regeneration initiation portion, predicting an engine-off opportunity measure for a future interval following initiation within the candidate regeneration initiation portion, using the route preview data.

Optionally, the engine-off opportunity measure comprises a predicted total eco-roll time within a pre-specified time window following initiation within the candidate regeneration initiation portion.

Optionally, the predicted fuel-saving loss is determined by estimating a fuel quantity that would be saved by enabling an engine start/stop function during predicted eco-roll segments within the future interval, and setting the predicted fuel-saving loss equal to the estimated fuel quantity.

Optionally, determining the predicted fuel consumption attributable to carrying out the particulate filter regeneration comprises predicting a regeneration fuel quantity as a function of a particulate filter loading metric.

Optionally, the particulate filter loading metric comprises at least one of: a soot load estimate, a pressure drop across the particulate filter, or a distance or a time window since a previous regeneration.

Optionally, the method further comprises, for each candidate regeneration initiation portion, evaluating a regeneration feasibility constraint for a regeneration interval resulting from initiating regeneration at the candidate regeneration initiation portion, wherein the regeneration feasibility constraint comprises at least one of:
o a constraint that an average engine power over a predetermined sub-period within the regeneration interval exceeds an engine power threshold;
o a constraint that a consecutive driving time above a vehicle speed threshold within the regeneration interval exceeds a time threshold; or
o a constraint that a particulate filter temperature within the regeneration interval exceeds a particulate filter temperature threshold;
wherein at least one of the average engine power, the consecutive driving time, or the particulate filter temperature is determined using the driving event information.

Optionally, selecting the regeneration initiation portion comprises selecting a candidate regeneration initiation such that the predicted fuel balance is below a threshold value while the regeneration feasibility constraint is satisfied.

Optionally, the method further comprises identifying a current vehicle operating condition, and adjusting at least one of the parameters: an average engine power, a consecutive driving time, or a particulate filter temperature determined from the driving event information based on the current vehicle operating condition.

Optionally, the current vehicle operating condition comprises at least one of: vehicle mass, ambient temperature, time of day, or weather condition.

Optionally, the predicted fuel-saving loss is determined as a function of predicted durations or distances for which the engine start/stop function would stop the engine absent the particulate filter regeneration.

According to a fourth aspect of the disclosure, a computer program product is provided. The computer program comprises program code for performing, when executed by the processing circuitry, the method of any of examples according to the third aspect.

According to a fifth aspect of the disclosure, a non-transitory computer-readable storage medium is provided. The computer-readable storage medium comprises instructions, which when executed by the processing circuitry, cause the processing circuitry to perform the method of any of examples according to the third aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is a schematic side view of a vehicle according to an example;
**FIG. 2** and **FIG. 3** are flow charts illustrating a method to determine a travel plan for a vehicle to travel from a first location to a second location;
**FIG. 4** shows an example of road preview data;
**FIG. 5** is a schematic diagram of an exemplary computer system for implementing methods disclosed herein.

### DETAILED DESCRIPTION

The detailed description set forth below provides information and examples of the disclosed technology with sufficient detail to enable those skilled in the art to practice the disclosure.

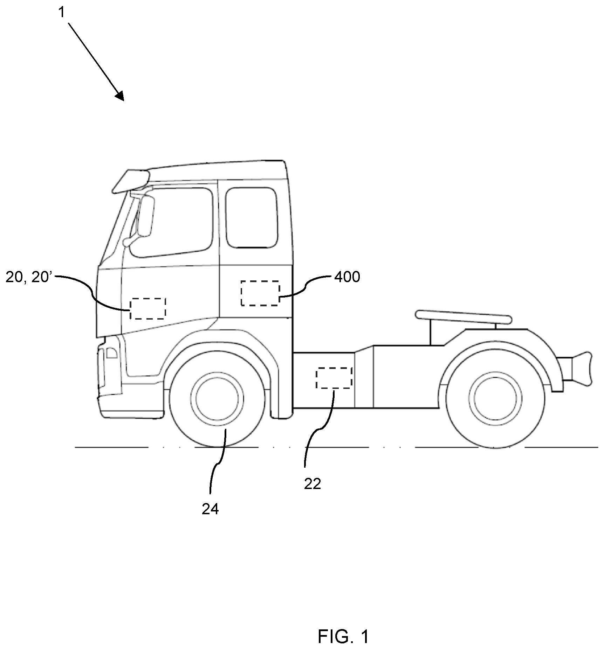

**FIG. 1** depicts a vehicle 1, which is exemplified by a truck. Even though a truck is shown, it shall be noted that the disclosure is not limited to this type of vehicle, but it may also be used for other vehicles, such as a bus, or construction equipment, e.g., a wheel loader or an excavator. The vehicle 100 may be an at least partly autonomous vehicle, or a human-driven vehicle.

The vehicle 1 comprises an engine system 20 that has an engine 20', preferably an internal combustion engine, configured to provide power for propelling the vehicle 1. The engine 20' may be of any suitable type, for instance a diesel engine or a gasoline engine. In some examples, the engine system 20 may solely comprise an internal combustion engine 20'. The engine system 20 further comprises a particulate filter 22 adapted to receive exhaust gas from the engine 20, in order to reduce harmful emissions, e.g. exhaust soot, to the environment. Depending on the type of the engine 20, the particulate filter 22 may be a diesel particulate filter, or a gasoline particulate filter. Over time, the particulate filter 22 may become saturated and may require regeneration so as to clean the particulate filter 22. This regeneration process may occur while driving. Moreover, it may require the engine 20 to stay running in order to maintain the high exhaust temperatures and flow necessary for effective cleaning. The vehicle 1 may comprise an engine start/stop function, which may help to save fuel and reduce emissions by automatically turning off the engine 20 when it is necessary and restarting it when needed. It may be realized that the regeneration process and the engine start/stop function cannot be activated simultaneously.

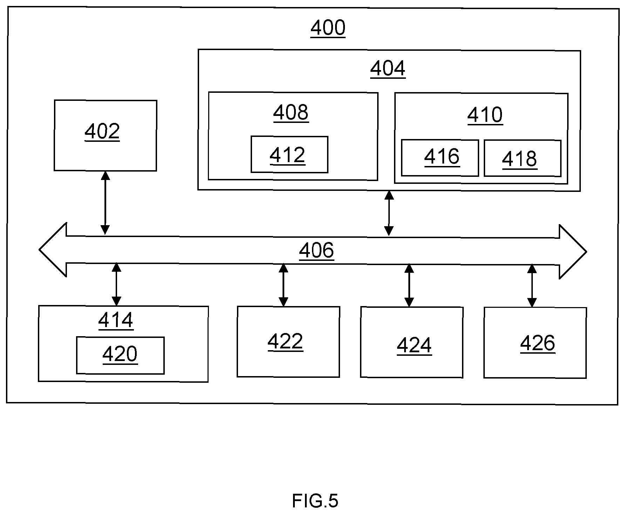

The vehicle 1 further comprises a computer system 400. The computer system 400 has processing circuitry 402 (see FIG. 5), which may also be referred to as a control unit. The processing circuitry of the computer system 400 may be configured to determine a travel plan using a method according to an example of the disclosure. Moreover, the computer system 400 may further comprise a communication unit for receiving various information, for instance, for receiving route information from a map data stored onboard and/or from a cloud server. In some examples, the vehicle 1 may further comprise a user interface which may be used to communicate or present information, such as a travel plan, to a user.

When performing a driving event, the vehicle 1 may travel across various geometric locations and encounter diverse operating conditions. Certain conditions may be more favorable for facilitating a regeneration process, while others may better support engine start/stop operations. Consequently, it may be desirable to determine a travel plan in advance, prior to a trip.

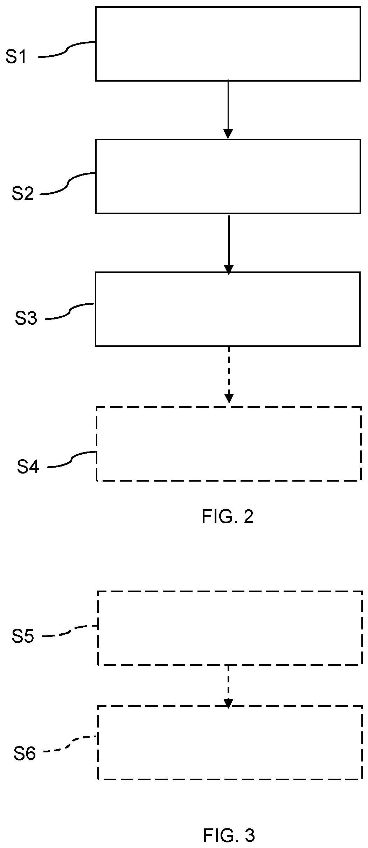

**FIG. 2** show flows chart illustrating a method for determining a travel plan for a vehicle 1 to travel from a first location to a second location, according to an example. The travel plan may be communicated through a user interface to provide guidance during travel. The travel plan may also be utilized for assisting motion planning and/or driving task planning for at least partly autonomous vehicles. The method may be performed by processing circuitry 402 of a computer system 400, such as the computer system 400 as shown in **FIG.1****.** The method comprises at least one of the actions listed in the following, which, unless otherwise indicated, may be taken in any suitable order:
S1: obtaining route preview data for an upcoming driving event, the route preview data comprising at least road gradient and at least one of speed limit data, traffic-dependent speed prediction data, or historical speed data for the route.

S2: using the obtained route preview data to determine, for each of a plurality of candidate regeneration initiation portions along the route, a respective predicted fuel balance associated with initiating particulate filter regeneration at the candidate regeneration initiation portions, wherein the predicted fuel balance is determined based on:
∘ a predicted fuel consumption attributable to carrying out the particulate filter regeneration when initiated at the candidate regeneration initiation portion; and
∘ a predicted fuel-saving loss attributable to inhibiting an engine start/stop function during at least part of a regeneration interval resulting from initiating the particulate filter regeneration at the candidate regeneration portion.

S3: on the basis of the determined predicted fuel balance, selecting a regeneration initiation portion among the plurality of candidate regeneration initiation portions for inclusion in the travel plan.

The route preview data may be obtained from one or more sensors and/or one or more databases. For example, the road gradient data may be derived from a GNSS/GPS receiver combined with a digital map, including elevation data, and/or from an inertial measurement unit (IMU) such as an accelerometer and gyroscope. The at least one of speed limit data, traffic-dependent speed prediction data, or historical speed data may be obtained from a navigation map database, a traffic information service, and/or a historical traffic database.

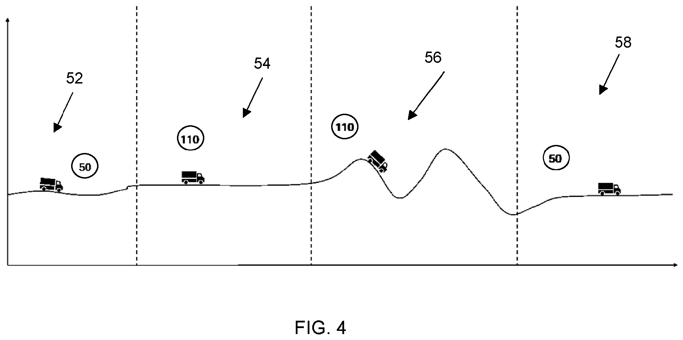

FIG. 4 shows an example of route preview data for an upcoming driving event, including the predicted road gradient profile and the associated speed information for successive route segments 52, 54, 56, 58, such as speed limits. Herein, 'preview' may be understood as a look-ahead view of what the vehicle is expected to face on the upcoming route segments before it actually gets there. In FIG. 4, the preview data includes the road gradient profile and speed information for upcoming route sections 52, 54, 56, 58, such as posted speed limits.

Moreover, the at least one of speed limit data, traffic-dependent speed prediction data, or historical speed data may indicate an expected vehicle speed profile along the route. By combining the expected speed profile with the road gradient information, the computer system may predict a vehicle load, expected exhaust temperature conditions, and the possibility of enabling stop-start events along the route. Based on these predictions, the computer system may estimate both the additional fuel consumption attributable to performing particulate filter regeneration and the fuel-saving loss attributable to inhibiting the engine start/stop function during at least part of the regeneration interval, thereby determining a predicted fuel impact for each candidate regeneration initiation portion. Accordingly, the computer system may select an appropriate regeneration initiation portion.

In some examples, determining the predicted fuel-saving loss comprises, for each candidate regeneration initiation portion, predicting an engine-off opportunity measure for a future interval following initiation within the candidate regeneration initiation portion, using the route preview data. Moreover, the engine-off opportunity measure may comprise a predicted total eco-roll time within a pre-specified time window following initiation within the candidate regeneration initiation portion. In these examples, the computer system may estimate the fuel-saving loss of starting regeneration at different candidate points by looking ahead at what the vehicle is likely to do after each possible start time, using route preview data, for example, upcoming gradients, speed limits and junctions. For each candidate regeneration initiation portion, it may predict an engine-off opportunity measure over a future interval, meaning how much potential there will be to switch the engine off or coast efficiently. One example of measure may be the predicted total eco-roll time within a fixed time window after initiation. If the regeneration event is initiated just before a section where long eco-roll periods are expected, it may reduce or eliminate those engine-off opportunities, increasing fuel usage, hence, the predicted eco-roll time may help to quantify the potential fuel-saving loss for that candidate start point. The predicted fuel-saving loss may for example be determined by estimating a fuel quantity that would be saved by enabling an engine start/stop function during predicted eco-roll segments within the future interval, and setting the predicted fuel-saving loss equal to the estimated fuel quantity. In some examples, the predicted fuel-saving loss may be determined as a function of predicted durations or distances for which the engine start/stop function would stop the engine absent the particulate filter regeneration.

Moreover, determining the predicted fuel consumption attributable to carrying out the particulate filter regeneration may comprise predicting a regeneration fuel quantity as a function of a particulate filter loading metric. The particulate filter loading metric may comprise at least one of: a soot load estimate, a pressure drop across the particulate filter, or a distance or a time window since a previous regeneration. The computer system may predict how much extra fuel regeneration will consume based on how loaded the particulate filter is. It may estimate the load using a soot load model, the measured pressure drop across the filter, or how long or how far the vehicle has travelled since the last regeneration. Higher loading typically means a longer or more intense regeneration, so the predicted regeneration fuel quantity increases accordingly.

The particulate filter loading metric may be obtained from stored vehicle data representing a current filter state and, where applicable, extrapolated to each candidate regeneration initiation portion. For example, a soot load estimate may be retrieved from an ECU-maintained soot loading model value calculated from prior driving up to the present time and optionally projected forwards using the route preview data. Additionally, or alternatively, a differential pressure across the particulate filter may be obtained as a most recently measured and stored value, optionally normalized for exhaust flow and converted to an equivalent loading estimate for prediction. A distance and or time window since a previous regeneration may be determined from regeneration history stored in memory, such as an odometer value and or timestamp recorded upon completion of the last regeneration, and may be advanced to each candidate initiation portion based on the planned route distance and predicted travel time.

In some examples, the route preview data further comprises driving event information from at least one previous driving event following the same route, the driving event information comprising at least one of a recorded engine power, a recorded vehicle speed, a recorded particulate filter temperature, a recorded road gradient, or a recorded consecutive driving time at a vehicle speed higher than a predetermined value.

In these examples, the method may further comprise the following actions as presented in FIG. 3:
S5: identifying a current vehicle operating condition. For instance, the current vehicle operating condition comprises at least one of: vehicle mass, ambient temperature, time of day, or weather condition.

S6: adjusting at least one of the parameters: an average engine power, a consecutive driving time, or a particulate filter temperature determined from the driving event information based on the current vehicle operating condition.

The route preview may use historical driving-event data from previous trips on the same route, collected under a range of operating conditions. By identifying the current operating condition, the computer system may adjust or calibrate parameters derived from the historical data, such as an average engine power, a consecutive high-speed driving time, or a particulate filter temperature. As a result, the adjusted parameters may better match what is expected on the current trip. In other words, these may be understood as predicted parameters. The adjustments may be achieved by, for instance, using a machine-learning model or statistical analysis such as interpolation or regression based on how those parameters varied across past conditions.

In some examples, the method may further comprise the action S4:
S4: for each candidate regeneration initiation portion, evaluating a regeneration feasibility constraint for a regeneration interval resulting from initiating regeneration at the candidate regeneration initiation portion. The regeneration feasibility constraint comprises at least one of:
o a constraint that an average engine power over a predetermined sub-period within the regeneration interval exceeds an engine power threshold;
o a constraint that a consecutive driving time above a vehicle speed threshold within the regeneration interval exceeds a time threshold; or
o a constraint that a particulate filter temperature within the regeneration interval exceeds a particulate filter temperature threshold.

In other words, for each candidate point at which regeneration could be initiated, the computer system may check whether regeneration would be feasible over the resulting regeneration interval. Feasibility is assessed by applying one or more constraints, such as requiring sufficient average engine power over a defined sub-period, enough consecutive time above a vehicle speed threshold, and/or a particulate filter temperature that exceeds a minimum threshold needed for effective regeneration.

In these examples, selecting the regeneration initiation portion comprises selecting a candidate regeneration initiation such that the predicted fuel balance is below a threshold value while the regeneration feasibility constraint is satisfied.

The computer system may choose a candidate regeneration initiation portion that keeps the predicted fuel balance below a threshold while also satisfying the regeneration feasibility constraints. In other words, the regeneration is scheduled only when it is both fuel-efficient and likely to complete successfully given the predicted engine power, vehicle speed profile and particulate filter temperature over the regeneration interval.

For the sake of completeness, the computer system may further determine, for the selected regeneration initiation portion, a regeneration start time and or start location and a regeneration finish time and or finish location corresponding to completion of a regeneration cycle. The determined start and finish may be derived from a predicted regeneration duration, which in turn may be based on the particulate filter loading metric and the route preview data. The travel plan may include the regeneration as a single regeneration event spanning from the regeneration start time and or location to the regeneration finish time and or location, thereby enabling coordinated control of vehicle functions, including inhibition of engine start and stop, over the planned regeneration interval.

Moreover, the travel plan may comprise one or more regeneration events, each regeneration event defining a respective regeneration initiation portion and an associated regeneration interval. For each regeneration event, the travel plan may specify at least one of: a planned start time, a planned start location, a planned finish time, a planned finish location, and a planned duration. In some examples, the travel plan comprises a plurality of regeneration events distributed along the route, for example to perform partial regenerations, to schedule successive regenerations for different particulate filters, or to reschedule a regeneration event if a preceding regeneration event is predicted to be interrupted or fails to satisfy the regeneration feasibility constraint.

Moreover, in some examples, the method may further comprise using the driving event information, and optionally the traffic-dependent speed prediction data, to predict one or more upcoming engine-off opportunities along the route, such as expected stops, low-speed congestion segments, downhill segments suitable for eco-roll, or other segments in which propulsion torque demand is predicted to be below a threshold. Based on the predicted engine-off opportunities, the processing circuitry may determine planned engine start/stop events for the upcoming driving event, including predicted engine-off start times and predicted engine restart times, so as to increase fuel saving while maintaining drivability and satisfying constraints on auxiliary loads and battery state of charge. In some examples, the planned engine start/stop events are co-optimised with the selected particulate filter regeneration initiation portion, such that regeneration is scheduled to avoid route portions in which frequent engine-off operation is predicted, and start/stop is enabled or disabled in accordance with the travel plan.

Optionally, the computer system may output control data for controlling the vehicle during the upcoming driving event in accordance with the determined travel plan. The control data may comprise at least one of: a command to initiate particulate filter regeneration at the selected regeneration initiation portion, a command to enable or inhibit the engine start/stop function over a specified interval.

**FIG 5****.** illustrates a computer system 400, such as the vehicle on-board computer system 400, for performing the method. Computer system **400** is adapted to execute instructions from a computer-readable medium to perform these and/or any of the functions or processing described herein. The computer system **400** may be connected e.g., networked) to other machines in a LAN, an intranet, an extranet, or the Internet. While only a single device is illustrated, the computer system **400** may include any collection of devices that individually or jointly execute a set or multiple sets of instructions to perform any one or more of the methodologies discussed herein. Accordingly, any reference in the disclosure and/or claims to a computer system, computing system, computer device, computing device, control system, control unit, electronic control unit ECU, processor device, processing circuitry, etc., includes reference to one or more such devices to individually or jointly execute a set or multiple sets) of instructions to perform any one or more of the methodologies discussed herein. For example, the control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network CAN bus, etc.

The computer system **400** may comprise at least one computing device or electronic device capable of including firmware, hardware, and/or executing software instructions to implement the functionality described herein. The computer system **400** may include processing circuitry **402** e.g., processing circuitry including one or more processor devices or control units), a memory **404,** and a system bus **406.** The computer system **400** may include at least one computing device having the processing circuitry **402.** The system bus **406** provides an interface for system components including, but not limited to, the memory **404** and the processing circuitry **402.** The processing circuitry **402** may include any number of hardware components for conducting data or signal processing or for executing computer code stored in memory **404.** The processing circuitry **402** may, for example, include a general-purpose processor, an application specific processor, a Digital Signal Processor DSP, an Application Specific Integrated Circuit ASIC, a Field Programmable Gate Array FPGA, a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **402** may further include computer executable code that controls operation of the programmable device.

The system bus **406** may be any of several types of bus structures that may further interconnect to a memory bus with or without a memory controller, a peripheral bus, and/or a local bus using any of a variety of bus architectures. The memory **404** may be one or more devices for storing data and/or computer code for completing or facilitating methods described herein. The memory **404** may include database components, object code components, script components, or other types of information structure for supporting the various activities herein. Any distributed or local memory device may be utilized with the systems and methods of this description. The memory **404** may be communicably connected to the processing circuitry **402** e.g., via a circuit or any other wired, wireless, or network connection) and may include computer code for executing one or more processes described herein. The memory **404** may include non-volatile memory **408** e.g., read-only memory ROM), erasable programmable read-only memory EPROM, electrically erasable programmable read-only memory EEPROM, etc., and volatile memory **410** e.g., random-access memory RAM)), or any other medium which can be used to carry or store desired program code in the form of machine-executable instructions or data structures and which can be accessed by a computer or other machine with processing circuitry **402.** A basic input/output system BIOS) **412** may be stored in the non-volatile memory **408** and can include the basic routines that help to transfer information between elements within the computer system **400.**

The computer system **400** may further include or be coupled to a non-transitory computer-readable storage medium such as the storage device **414,** which may comprise, for example, an internal or external hard disk drive HDD) e.g., enhanced integrated drive electronics EIDE or serial advanced technology attachment SATA, HDD e.g., EIDE or SATA) for storage, flash memory, or the like. The storage device **414** and other drives associated with computer-readable media and computer-usable media may provide non-volatile storage of data, data structures, computer-executable instructions, and the like.

Computer-code which is hard or soft coded may be provided in the form of one or more modules. The modules can be implemented as software and/or hard-coded in circuitry to implement the functionality described herein in whole or in part. The modules may be stored in the storage device **414** and/or in the volatile memory **410,** which may include an operating system **416** and/or one or more program modules **418.** All or a portion of the examples disclosed herein may be implemented as a computer program **420** stored on a transitory or non-transitory computer-usable or computer-readable storage medium e.g., single medium or multiple media), such as the storage device **414,** which includes complex programming instructions e.g., complex computer-readable program code to cause the processing circuitry **402** to carry out actions described herein. Thus, the computer-readable program code of the computer program **420** can comprise software instructions for implementing the functionality of the examples described herein when executed by the processing circuitry **402.** In some examples, the storage device **414** may be a computer program product e.g., readable storage medium storing the computer program **420** thereon, where at least a portion of a computer program **420** may be loadable e.g., into a processor) for implementing the functionality of the examples described herein when executed by the processing circuitry **402.** The processing circuitry **402** may serve as a controller or control system for the computer system **400** that is to implement the functionality described herein.

The computer system **400** may include an input device interface **422** configured to receive input and selections to be communicated to the computer system **400** when executing instructions, such as from a keyboard, mouse, touch-sensitive surface, etc. Such input devices may be connected to the processing circuitry **402** through the input device interface **422** coupled to the system bus **406** but can be connected through other interfaces, such as a parallel port, an Institute of Electrical and Electronic Engineers IEEE 1394 serial port, a Universal Serial Bus USB) port, an IR interface, and the like. The computer system **400** may include an output device interface **424** configured to forward output, such as to a display, a video display unit e.g., a liquid crystal display LCD or a cathode ray tube CRT. The computer system **400** may include a communications interface **426** suitable for communicating with a network as appropriate or desired.

Moreover, the present disclosure may be exemplified by any one of the below examples and combination of examples.
Example 1. A computer system (400) comprising processing circuitry (402) configured to generate a travel plan for a vehicle (1) to travel from a first location to a second location, the vehicle (1) comprising an engine system (20) comprising an internal combustion engine (20'), and a particulate filter (22) adapted to receive exhaust gas from the internal combustion engine (20'), wherein the processing circuitry (402) is further configured to:
   - obtain route preview data for an upcoming driving event, the route preview data comprising at least road gradient and at least one of speed limit data, traffic-dependent speed prediction data, or historical speed data for the route;
   - use the obtained route preview data to determine, for each of a plurality of candidate regeneration initiation portions along the route, a respective predicted fuel balance associated with initiating particulate filter regeneration at the candidate regeneration initiation portion, wherein the predicted fuel balance is determined based on:
      ∘ a predicted fuel consumption attributable to carrying out the particulate filter regeneration when initiated at the candidate regeneration initiation portion; and
      ∘ a predicted fuel-saving loss attributable to inhibiting an engine start/stop function during at least part of a regeneration interval resulting from initiating the particulate filter regeneration at the candidate regeneration initiation portion;
   - on the basis of the determined predicted fuel balance, select a regeneration initiation portion among the plurality of candidate regeneration initiation portions for inclusion in the travel plan.
Example 2. The computer system according to example 2, wherein the route preview data further comprises driving event information from at least one previous driving event following the same route, the driving event information comprising at least one of a recorded engine power, a recorded vehicle speed, a recorded particulate filter temperature, a recorded road gradient, or a recorded consecutive driving time at a vehicle speed higher than a predetermined value.
Example 3. The computer system according to any one of examples 1-2, wherein determining the predicted fuel-saving loss comprises, for each candidate regeneration initiation portion, predicting an engine-off opportunity measure for a future interval following initiation within the candidate regeneration initiation portion, using the route preview data.
Example 4. The computer system according to example 3, wherein the engine-off opportunity measure comprises a predicted total eco-roll time within a pre-specified time window following initiation within the candidate regeneration initiation portion.
Example 5. The computer system according to any one of examples 3-4, wherein the predicted fuel-saving loss is determined by estimating a fuel quantity that would be saved by enabling an engine start/stop function during predicted eco-roll segments within the future interval, and setting the predicted fuel-saving loss equal to the estimated fuel quantity.
Example 6. The computer system according to any one of examples 1-5, wherein determining the predicted fuel consumption attributable to carrying out the particulate filter regeneration comprises predicting a regeneration fuel quantity as a function of a particulate filter loading metric.
Example 7. The computer system according to example 6, wherein the particulate filter loading metric comprises at least one of: a soot load estimate, a pressure drop across the particulate filter, or a distance or a time window since a previous regeneration.
Example 8. The method of any one of any one of examples 1-7, the processing circuitry (402) is further configured to, for each candidate regeneration initiation portion, evaluate a regeneration feasibility constraint for a regeneration interval resulting from initiating regeneration at the candidate regeneration initiation portion, wherein the regeneration feasibility constraint comprises at least one of:
   o a constraint that an average engine power over a predetermined sub-period within the regeneration interval exceeds an engine power threshold;
   o a constraint that a consecutive driving time above a vehicle speed threshold within the regeneration interval exceeds a time threshold; or
   o a constraint that a particulate filter temperature within the regeneration interval exceeds a particulate filter temperature threshold;
   wherein at least one of the average engine power, the consecutive driving time, or the particulate filter temperature is determined using the driving event information.
Example 9. The computer system according to example 8, wherein selecting the regeneration initiation portion comprises selecting a candidate regeneration initiation such that the predicted fuel balance is below a threshold value while the regeneration feasibility constraint is satisfied.
Example 10. The computer system according to any of examples 1-9, the processing circuitry (402) is further configured to identify a current vehicle operating condition, and adjust at least one of the parameters: an average engine power, a consecutive driving time, or a particulate filter temperature determined from the driving event information based on the current vehicle operating condition.
Example 11. The computer system according to example 10, wherein the current vehicle operating condition comprises at least one of: vehicle mass, ambient temperature, time of day, or weather condition.
Example 12. The computer system according to any one of examples 1-11, wherein the predicted fuel-saving loss is determined as a function of predicted durations or distances for which the engine start/stop function would stop the engine absent the particulate filter regeneration.
Example 13. A vehicle comprising the computer system (400) according to any one of examples 1-12.
Example 14. A computer-implemented method for generating a travel plan for a vehicle (1) to travel from a first location to a second location, the vehicle (1) comprising an engine system (20) comprising an internal combustion engine (20'), and a particulate filter (22) adapted to receive exhaust gas from the internal combustion engine (20'), the method comprising:
   - obtaining (S1), by processing circuitry, route preview data for an upcoming driving event, the route preview data comprising at least road gradient and at least one of speed limit data, traffic-dependent speed prediction data, or historical speed data for the route;
   - using (S2), by the processing circuitry, the obtained route preview data to determine, for each of a plurality of candidate regeneration initiation portions along the route, a respective predicted fuel balance associated with initiating particulate filter regeneration at the candidate regeneration initiation portions, wherein the predicted fuel balance is determined based on:
      ∘ a predicted fuel consumption attributable to carrying out the particulate filter regeneration when initiated at the candidate regeneration initiation portion; and
      ∘ a predicted fuel-saving loss attributable to inhibiting an engine start/stop function during at least part of a regeneration interval resulting from initiating the particulate filter regeneration at the candidate regeneration portion;
   - on the basis of the determined predicted fuel balance, selecting (S3), by the processing circuitry, a regeneration initiation portion among the plurality of candidate regeneration initiation portions for inclusion in the travel plan.
Example 15. The method according to example 14, wherein the route preview data further comprises driving event information from at least one previous driving event following the same route, the driving event information comprising at least one of a recorded engine power, a recorded vehicle speed, a recorded particulate filter temperature, a recorded road gradient, or a recorded consecutive driving time at a vehicle speed higher than a predetermined value.
Example 16. The method according to any one of examples 14-15, wherein determining the predicted fuel-saving loss comprises, for each candidate regeneration initiation portion, predicting an engine-off opportunity measure for a future interval following initiation within the candidate regeneration initiation portion, using the route preview data.
Example 17. The method of example 16, wherein the engine-off opportunity measure comprises a predicted total eco-roll time within a pre-specified time window following initiation within the candidate regeneration initiation portion.
Example 18. The method according to any one of examples 14-17, wherein the predicted fuel-saving loss is determined by estimating a fuel quantity that would be saved by enabling an engine start/stop function during predicted eco-roll segments within the future interval, and setting the predicted fuel-saving loss equal to the estimated fuel quantity.
Example 19. The method according to any one of examples 17-18, wherein determining the predicted fuel consumption attributable to carrying out the particulate filter regeneration comprises predicting a regeneration fuel quantity as a function of a particulate filter loading metric.
Example 20. The method according to example 19, wherein the particulate filter loading metric comprises at least one of: a soot load estimate, a pressure drop across the particulate filter, or a distance or a time window since a previous regeneration.
Example 21. The method according to any one of examples 14-20, further comprising, for each candidate regeneration initiation portion, evaluating (S4) a regeneration feasibility constraint for a regeneration interval resulting from initiating regeneration at the candidate regeneration initiation portion, wherein the regeneration feasibility constraint comprises at least one of:
   o a constraint that an average engine power over a predetermined sub-period within the regeneration interval exceeds an engine power threshold;
   o a constraint that a consecutive driving time above a vehicle speed threshold within the regeneration interval exceeds a time threshold; or
   o a constraint that a particulate filter temperature within the regeneration interval exceeds a particulate filter temperature threshold;
   wherein at least one of the average engine power, the consecutive driving time, or the particulate filter temperature is determined using the driving event information.
Example 22. The method according to example 21, wherein selecting the regeneration initiation portion comprises selecting a candidate regeneration initiation such that the predicted fuel balance is below a threshold value while the regeneration feasibility constraint is satisfied.
Example 23. The method according to any one of examples 14-22, further comprising identifying (S5) a current vehicle operating condition, and adjusting (S6) at least one of the parameters: an average engine power, a consecutive driving time, or a particulate filter temperature determined from the driving event information based on the current vehicle operating condition.
Example 24. The method according to example 23, wherein the current vehicle operating condition comprises at least one of: vehicle mass, ambient temperature, time of day, or weather condition.
Example 25. The method according to any one of examples 14-24, wherein the predicted fuel-saving loss is determined as a function of predicted durations or distances for which the engine start/stop function would stop the engine absent the particulate filter regeneration.
Example 26. A computer program product comprising program code for performing, when executed by the processing circuitry (402), the method of any of examples 14-244.
Example 27. A non-transitory computer-readable storage medium comprising instructions, which when executed by the processing circuitry (402), cause the processing circuitry (402) to perform the method of any of examples 14-14.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (400) comprising processing circuitry (402) configured to generate a travel plan for a vehicle (1) to travel from a first location to a second location, the vehicle (1) comprising an engine system (20) comprising an internal combustion engine (20'), and a particulate filter (22) adapted to receive exhaust gas from the internal combustion engine (20'), wherein the processing circuitry (402) is further configured to:
- obtain route preview data for an upcoming driving event, the route preview data comprising at least road gradient and at least one of speed limit data, traffic-dependent speed prediction data, or historical speed data for the route;
- use the obtained route preview data to determine, for each of a plurality of candidate regeneration initiation portions along the route, a respective predicted fuel balance associated with initiating particulate filter regeneration at the candidate regeneration initiation portion, wherein the predicted fuel balance is determined based on:
∘ a predicted fuel consumption attributable to carrying out the particulate filter regeneration when initiated at the candidate regeneration initiation portion; and
∘ a predicted fuel-saving loss attributable to inhibiting an engine start/stop function during at least part of a regeneration interval resulting from initiating the particulate filter regeneration at the candidate regeneration initiation portion;
- on the basis of the determined predicted fuel balance, select a regeneration initiation portion among the plurality of candidate regeneration initiation portions for inclusion in the travel plan.

2. A vehicle comprising the computer system (400) according to claim 1.

3. A computer-implemented method for generating a travel plan for a vehicle (1) to travel from a first location to a second location, the vehicle (1) comprising an engine system (20) comprising an internal combustion engine (20'), and a particulate filter (22) adapted to receive exhaust gas from the internal combustion engine (20'), the method comprising:
- obtaining (S1), by processing circuitry, route preview data for an upcoming driving event, the route preview data comprising at least road gradient and at least one of speed limit data, traffic-dependent speed prediction data, or historical speed data for the route;
- using (S2), by the processing circuitry, the obtained route preview data to determine, for each of a plurality of candidate regeneration initiation portions along the route, a respective predicted fuel balance associated with initiating particulate filter regeneration at the candidate regeneration initiation portions, wherein the predicted fuel balance is determined based on:
∘ a predicted fuel consumption attributable to carrying out the particulate filter regeneration when initiated at the candidate regeneration initiation portion; and
∘ a predicted fuel-saving loss attributable to inhibiting an engine start/stop function during at least part of a regeneration interval resulting from initiating the particulate filter regeneration at the candidate regeneration portion;
- on the basis of the determined predicted fuel balance, selecting (S3), by the processing circuitry, a regeneration initiation portion among the plurality of candidate regeneration initiation portions for inclusion in the travel plan.

4. The method according to claim 3, wherein the route preview data further comprises driving event information from at least one previous driving event following the same route, the driving event information comprising at least one of a recorded engine power, a recorded vehicle speed, a recorded particulate filter temperature, a recorded road gradient, or a recorded consecutive driving time at a vehicle speed higher than a predetermined value.

5. The method according to any one of claims 3-4, wherein determining the predicted fuel-saving loss comprises, for each candidate regeneration initiation portion, predicting an engine-off opportunity measure for a future interval following initiation within the candidate regeneration initiation portion, using the route preview data.

6. The method according to claim 5, wherein the engine-off opportunity measure comprises a predicted total eco-roll time within a pre-specified time window following initiation within the candidate regeneration initiation portion.

7. The method according to any one of claims 3-6, wherein the predicted fuel-saving loss is determined by estimating a fuel quantity that would be saved by enabling an engine start/stop function during predicted eco-roll segments within the future interval, and setting the predicted fuel-saving loss equal to the estimated fuel quantity.

8. The method according to any one of claims 3-7, wherein determining the predicted fuel consumption attributable to carrying out the particulate filter regeneration comprises predicting a regeneration fuel quantity as a function of a particulate filter loading metric.

9. The method according to claim 8, wherein the particulate filter loading metric comprises at least one of: a soot load estimate, a pressure drop across the particulate filter, or a distance or a time window since a previous regeneration.

10. The method according to any one of claims 3-9, further comprising, for each candidate regeneration initiation portion, evaluating (S4) a regeneration feasibility constraint for a regeneration interval resulting from initiating regeneration at the candidate regeneration initiation portion, wherein the regeneration feasibility constraint comprises at least one of:
o a constraint that an average engine power over a predetermined sub-period within the regeneration interval exceeds an engine power threshold;
o a constraint that a consecutive driving time above a vehicle speed threshold within the regeneration interval exceeds a time threshold; or
o a constraint that a particulate filter temperature within the regeneration interval exceeds a particulate filter temperature threshold;
wherein at least one of the average engine power, the consecutive driving time, or the particulate filter temperature is determined using the driving event information.

11. The method according to claim 10, wherein selecting the regeneration initiation portion comprises selecting a candidate regeneration initiation such that the predicted fuel balance is below a threshold value while the regeneration feasibility constraint is satisfied.

12. The method according to any one of claims 3-11, further comprising identifying (S5) a current vehicle operating condition, and adjusting (S6) at least one of the parameters: an average engine power, a consecutive driving time, or a particulate filter temperature determined from the driving event information based on the current vehicle operating condition.

13. The method according to claim 12, wherein the current vehicle operating condition comprises at least one of: vehicle mass, ambient temperature, time of day, or weather condition.

14. A computer program product comprising program code for performing, when executed by the processing circuitry (402), the method of any of claims 3-13.

15. A non-transitory computer-readable storage medium comprising instructions, which when executed by the processing circuitry (402), cause the processing circuitry (402) to perform the method of any of claims 3-13.
